# EUROPEAN PATENT SPECIFICATION

(11) **EP 2 978 083 B1**
(45) Date of publication and mention of the grant of the patent: **08.05.2024**
(21) Application number: 15165013.2
(22) Date of filing: 24.04.2015
(51) Int. Cl.: H01M 10/42, H04B 1/3888, H01R 27/02, G06F 1/16, G06F 1/26, H04M 1/02, H04M 1/18

(54) **A MOBILE TERMINAL FITTING AND AN ELECTRIC CONNECTOR FOR THE SAME**
MOBILES ENDGERÄT UND EIN ELEKTRISCHER VERBINDER DAFÜR
RACCORD TERMINAL MOBILE ET CONNECTEUR ÉLECTRIQUE POUR CELUI-CI

(30) Priority: 23.07.2014 CN 201410351454; 04.08.2014 CN 201420435094 U
(43) Date of publication of application: 27.01.2016
(73) Proprietor: Baotou Youran Network Technology Co., Ltd, 014000 Baotou Inner Mongolia (CN)
(72) Inventor: Pan, Jian, 014000 Baotou (CN); Zhao, Jinqiu, 014000 Baotou (CN)
(74) Representative: Friese Goeden Patentanwälte PartGmbB

(56) References cited:
- WO-A1-2011/150403
- WO-A1-2013/081222
- WO-A1-2014/071539
- CN-U- 201 946 650
- US-A1- 2012 177 967
- US-A1- 2013 314 880
- Lex Friedman: "Review: Best battery cases for the iPhone 5 | Macworld", , 30 June 2013 (2013-06-30), XP055224461, Retrieved from the Internet: URL:http://www.macworld.com/article/204526 8/review-best-battery-cases-for-the-iphone -5.html [retrieved on 2015-10-29]

## Description

### Cross Reference to Related Application

This application claims the benefit of, and priority to, Chinese Patent Application No. 201410351454.3 filed on July 23, 2014, and No. 201420435094.0 filed on August 4, 2014.

### BACKGROUND

### [FIELD OF THE DISCLOSURE]

The present disclosure relates to the field of mobile terminal fittings, particularly to a mobile terminal fitting and an electric connector for the same.

### [BACKGROUND OF THE DISCLOSURE]

Mobile terminals (such as smart mobile phones and tablet PCs) have become increasingly popular. Various fittings applied to the mobile terminals, such as a mobile terminal protective case, have also emerged on the market. However, most of the existing fittings are just used to add a protective case or a protective cover to the surface of the mobile terminals so as to protect and beautify the mobile terminals, without making specific improvements on the actual use functions of the mobile terminals, which makes the mobile terminal fittings have a monotonous function and no extended functions.

Besides, the mobile terminal fittings as described above, when being used as a protective case, are mostly formed into a one-piece structure, which results in difficult installation and removal, making the mobile terminal fittings prone to be deformed and damaged after repeated installation and removal.

US 2012/0177967 discloses battery case for portable electronic devices. A battery case has a recessed space for receiving a portable electronic device. When the portable electronic device is placed in the battery case, a supplemental battery in the battery case is able to charge an original battery of the portable electronic device. The battery case has a first supplemental connector capable of being electrically coupled to an original inner connector of the portable electronic device, and a second supplemental connector exposed to the outside of the battery case. The second supplemental connector is configured to be compatible with an original outer connector of an original extension cable that comes with the original product package of the portable electronic device, such that the original outer connector can be inserted into the second supplemental connector of the battery case.

### SUMMARY

The present disclosure provides an electric connector for the same, so as to not only solve the problem that the traditional mobile terminal fittings have a single function and no extended functions, but also solve the problem that the traditional mobile terminal fittings are inconvenient to be removed and installed when they are used as a The present invention discloses an electric connector for a mobile terminal fitting according to claim 1.

In one embodiment, the present disclosure discloses a mobile terminal fitting, which comprises a case body, an electric connector and a circuit board. The case body has a bottom plate and a side plate. The side plate disposed around the bottom plate to form an accommodating groove by enclosing together with the bottom plate. The electric connector, disposed on the case body, comprises a socket and a plug, the plug being provided with an inserting portion and a first pin portion having a plurality of pins, the socket being provided with an accommodating portion and a second pin portion having a plurality of pins. The circuit board, disposed in or on the bottom plate of the case body, is electrically connected with the pins of the first pin portion and the pins of the second pin portion, respectively.

### BRIEF DESCRIPTION OF THE DRAWINGS

The features of the exemplary embodiments believed to be novel and the elements and/or the steps characteristic of the exemplary embodiments are set forth with particularity in the appended claims. The Figures are for illustration purposes only and are not drawn to scale. The exemplary embodiments, both as to organization and method of operation, may best be understood by reference to the detailed description which follows taken in conjunction with the accompanying drawings in which:
Fig. 1 is a perspective view of the electric connector of the mobile terminal fitting according the embodiment of the present disclosure;
Fig. 2 is a side view of the electric connector of the mobile terminal fitting of the example according the embodiment of the present disclosure;
Fig. 3 is a side view of the electric connector of the mobile terminal fitting of the example according the embodiment of the present disclosure;
Fig. 4 is a schematic view of the disassembled structure of the mobile terminal fitting according the embodiment of the present disclosure; and
Fig. 5 is a schematic view of the assembled structure of the mobile terminal fitting according the embodiment of the present disclosure.

### DETAILED DESCRIPTION OF THE EMBODIMENTS

The embodiments of the present disclosure will be described below in detail with reference to drawings and examples, by which the implementation process that the present disclosure applies the technical means to solve the technical problems and achieves the technical effects can be understood and implemented accordingly.

Some words and phrases as used in the description and claims refer to particular components. Those skilled in the art can and shall understand that hardware manufacturers may use different terms to refer to the same components. The description and claims are not to distinguish between the components based on the differences in names, but use the differences in functions of the components as a distinguishing criterion. The word "including/comprising" appearing throughout the description and claims is an open-style terminology, and shall be interpreted to mean "including but not limited to". "Substantially" means that those skilled in the art, within an acceptable error range, can solve said problems within a certain error range, and basically achieve said technical effects. Besides, the word or phrase "coupled" or "electrically connected" as used herein contains any direct or indirect electrically coupling means. Therefore, if it is described herein that a first device is coupled to a second device, it represents that the first device may be directly electrically coupled to the second device, or indirectly electrically coupled to the second device by other devices or coupling means. The following description describes the embodiments of the present disclosure; however, the following description still takes the general principles of the present disclosure as the purpose, instead of being intended to define the scope of the present disclosure. The scope of the present disclosure shall be as defined in the appended claims.

It also needs to be explained that the term "comprising", "including" or any other variation thereof is intended to cover a non-exclusive inclusion, such that a process, a method, a product or a system comprising/including a series of elements not only comprises/includes those elements, but also comprises/includes other elements not expressly listed, or further comprises/includes elements inherent for such a process, method, product or system. In the absence of more restrictions, an element defined by the statement "comprising/including a ..." does not exclude the existence of additional identical elements in the process, method, product or system comprising/including the element.

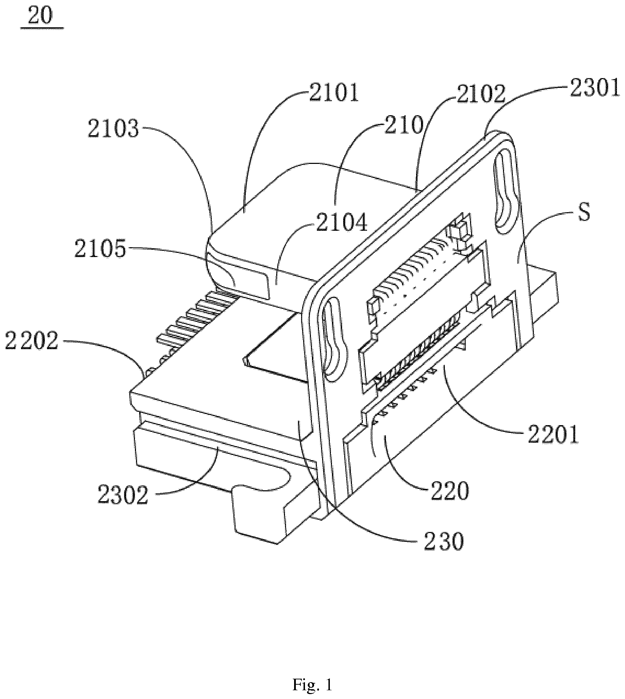

As shown in Fig. 1, which is a perspective view of an electric connector for the mobile terminal fitting according to the embodiment of the present disclosure, the electric connector 20 includes a plug 210 and a socket 220.

The plug 210 is provided with an inserting portion 2101 having a plurality of electrical contacts and a first pin portion 2102 having a plurality of pins. The pins are respectively electrically connected with the electrical contacts and extend for a first distance in the vertical direction after leading out from the rear end of the inserting portion 2101 and extend for a second distance in the horizontal direction toward the front end of the inserting portion 2101 after extending for the first distance in the vertical direction. The socket 220 is provided with an accommodating portion 2201 having a plurality of electrical contacts and a second pin portion 2202 having a plurality of pins, the pins being respectively electrically connected with the electrical contacts and extending for a third distance in the horizontal direction from the rear end of the accommodating portion 2201.

The accommodating portion 2201 is used for accommodating a plug such as a charging cord plug or a data transmission cable plug that corresponds to the base socket of the mobile terminal; the pin of the first pin portion 2102 extends for a first distance in the vertical direction after leading out from the rear end of the inserting portion 2101, which extending in the vertical direction shortens the dimension of the electric connector 20 along the inserting portion 2101 compared with the traditional extending of the pin in the horizontal direction. Thus the overall size of the electric connector 20 is reduced, and the length of the mobile terminal fitting is also significantly reduced and the layout is more reasonable. The first distance matches the distance from the lower edge of the base socket of the mobile terminal to the rear side of the mobile terminal. This matching relationship can not only ensure that the plug 210 of the electric connector 20 may be inserted into the base socket of the mobile terminal smoothly, but also make the connection between the mobile terminal and the electric connector 20 more compact and integral, saving the space, reducing the thickness of the electric connector 20 and the terminal mobile fitting.

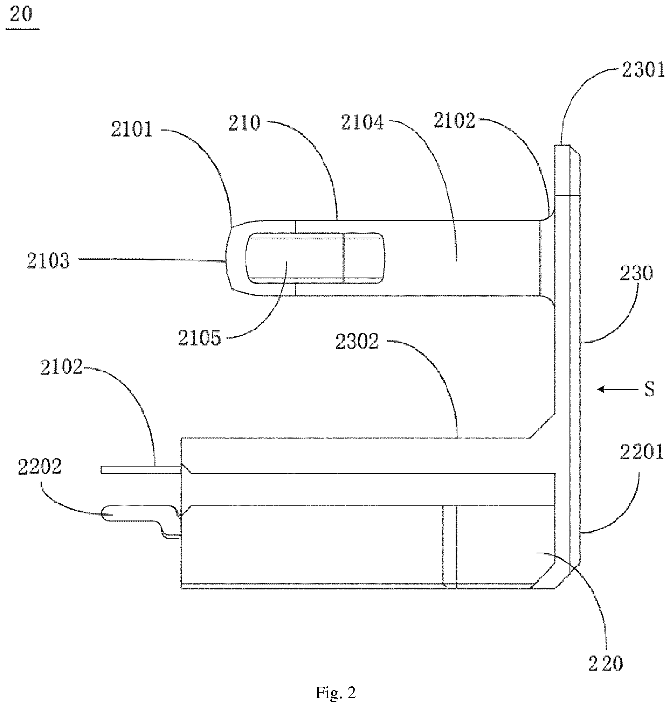

As shown in Fig. 2, which is a side view of an electric connector for the mobile terminal fitting according to the embodiment of the present disclosure, the inserting direction of the plug 210 is parallel to the accommodating direction of the socket 220. The design can ensure that the socket 220 of the electric connector 20 of the present disclosure keeps consistent with the base socket of the mobile terminal in direction while in use, and is more convenient compared with the prior art wherein the inserting direction of the plug 210 of the electric connector 20 is vertical to the accommodating direction of the socket 220.

As shown in Fig. 2, which is a side view of an electric connector for the mobile terminal fitting according to the example of the present disclosure, there is a fourth distance in the vertical direction from the portion of the pin of the plug 210 extending in the horizontal direction toward the front end of the inserting portion 2101 to the portion of the pin of the socket 220 extending in the horizontal direction. In order to ensure the electrical interconnection between the plug 210 and the socket 220, an electronic component needs to be disposed in the space formed by the fourth distance, so as to establish the electrical interconnection between the plug 210 and the socket 220. A circuit board is often used in the mobile terminal fitting, i.e., an embodiment for the electronic component of the present disclosure is a circuit board; wherein the fourth distance matches the thickness of the circuit board in the mobile terminal fitting, i.e., the circuit board in the mobile terminal fitting needs to be inserted into the space formed by the fourth distance. This mutually matched size relationship can not only ensure that the plug 210 and the socket 220 are electrically interconnected, but also reduce the thickness of the electric connector effectively, and thus the thickness of the entire terminal mobile fitting is reduced. Disposing a circuit board in the space formed by the fourth distance is merely an exemplary embodiment of the present disclosure and will not limit the scope of protection of the present disclosure.

As shown in Fig. 1, which is a perspective view of an electric connector for the mobile terminal fitting according to the embodiment of the present disclosure, the portion of the pin of the plug 210 extending in the horizontal direction toward the front end of the inserting portion 2201 and the portion of the pin of the socket 220 extending in the horizontal direction are mutually stacked in the vertical direction. The "mutually stacked" design is merely an exemplary embodiment of this embodiment, and will not limit other examples. This can ensure that the accommodating portion 2201 is located just under the inserting portion 2101, i.e. just under the base socket of the mobile terminal, which is the most convenient for operation. This design does not limit the present disclosure. As previously mentioned, only ensuring that the inserting direction of the plug 210 is parallel to the accommodating direction of the socket 220 will be enough to make the accommodating portion 2201 have the same accommodating direction with the base socket of the mobile terminal.

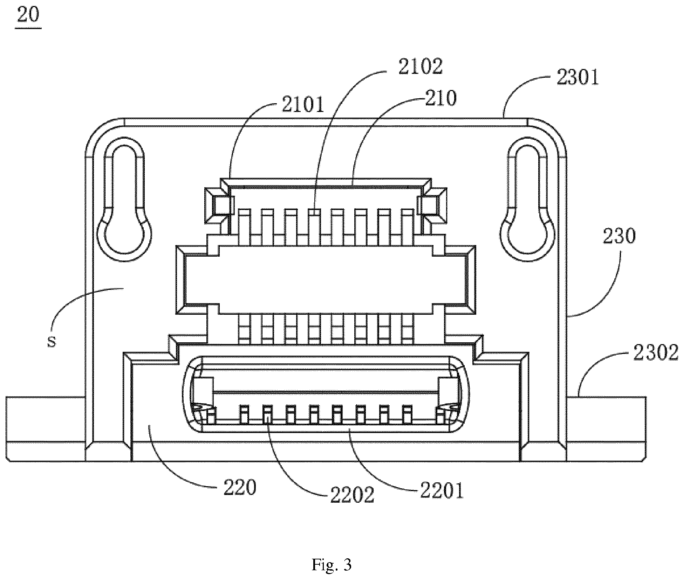

As shown in Figs. 2 and 3, which are a side view of an electric connector for the mobile terminal fitting according to the embodiment of the present disclosure, the portion of the pin of the first pin portion 2102 of the plug 210, extending in the vertical direction after leading out from the rear end of the inserting portion 2101, is in the same plane S with the outer side of the accommodating portion 2201 of the socket 220. This design is more reasonable compared with the prior art wherein there is a space between the rear end of the inserting portion 2101 and the side of the accommodating portion 2201, The size from the front portion of the inserting portion 2101 to the outer side of the accommodating portion 2201 is reduced, and thus the size of the electric connector 20 is reduced, and the length of the terminal mobile fitting is further reduced, saving materials on one hand and making the mobile terminal fitting more compact on the other hand.

As shown in Fig. 1, which is a perspective view of an electric connector for the mobile terminal fitting according to the embodiment of the present disclosure, an electric connector 20 for the mobile terminal fitting of the present disclosure further comprises a carrier plate 230, which includes a connecting body 2301 and a wrapping body 2302. The connecting body 2301, vertical to the plug 210 and the socket 220, makes the portion of the pin of the first pin portion 2102 extending in the vertical direction after leading out from the rear end of the inserting portion 2101 and the outer side of the accommodating portion 2201 of the socket 220 fixed on the inner side of the connecting body 2301; the wrapping body 2302, being of an inverted U shape, is vertical to the connecting body 2301, with the U-shaped space wrapping the socket 220 and the front end section fixed at the connecting body 2301. The carrier plate 230 provides an installation substrate for the plug 210 and the socket 220 to make them integrated with each other, facilitating removal and installation of the electric connector 20.

As shown in Fig. 1, which is a perspective view of an electric connector for the mobile terminal fitting according to the embodiment of the present disclosure, the inserting portion 2101 has an upper surface and a lower surface, with a plurality of electrical contacts on the lower surface. Because a single-sided electrical contact is often disposed in the base socket corresponding to the plug, a traditional plug corresponding to the base socket of the mobile terminal usually has a double-sided electrical contact. The plug structure having the same double-sided electrical contact can avoid the trouble that a user needs to distinguish between the front and rear sides of the plug, i.e., the electrical connection between the plug and the socket can be guaranteed no matter how the plug is inserted. While the plug 210 of the electric connector 20 of this embodiment is fixed and cannot be inverted, i.e., its front and rear sides have been set. Therefore, without designing a plug of the double-sided electrical contact structure, its use effects can still be achieved. Besides, compared with the plug with a double-sided electrical contact, the plug with a single-sided electrical contact saves more raw materials, and reduces the economic costs. Moreover, providing an electrical contact on the lower surface of the plug 210 can prevent dust and protect the electrical contact.

As shown in Fig. 2, which are a side view of an electric connector for the mobile terminal fitting according to the embodiment of the present disclosure, the inserting portion 2101 has one front end side 2103 and two lateral end sides 2104, with a smooth transition formed at the junction between the front end side 2103 and the two lateral end sides 2104. The two lateral end sides 2104 have a lead-in slot 2105, respectively, which is formed on one end into a depression on the lateral end side 2104, and smoothly extends on the other end to the smooth transition of the front end side 2103. This lead-in slot 2105 can guide the plug 210 smoothly into the base socket of the mobile terminal.

As shown in Fig. 1, which is a perspective view of an electric connector for the mobile terminal fitting according to the embodiment of the present disclosure, the inserting direction of the inserting portion 2101 is different from the opening direction of the accommodating portion 2201. The design can ensure that the plug of a charging cord or a data transmission cable can be inserted into the accommodating portion 2201 very smoothly when the inserting portion 2101 is inserted into the base socket of the mobile terminal, i.e. when the electric connector is connected with the mobile terminal, thus making the operation faster and more convenient.

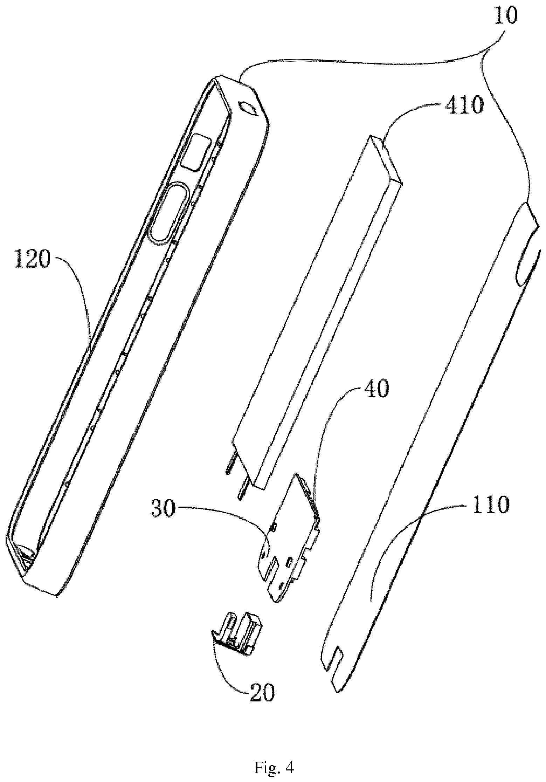

As shown in Fig. 4, which is a schematic view of the disassembled structure of a mobile terminal fitting according to the example of the present disclosure, a mobile terminal fitting comprises a case body 10, an electric connector 20 and a circuit board 30.

The case body 10 has a bottom plate 110 and a side plate 120, with the side plate 120 disposed around the bottom plate 110 and forming an accommodating groove 130 by enclosing together with the bottom plate 110.

The electric connector 20 can be disposed on the case body 10, wherein the electric connector 20 corresponds to a positioning hole 1201 on the side plate 120, making the plug of a charging cord or a data transmission cable of the mobile terminal go through the positioning hole 1201 on the side plate 120 and inserted into the accommodating portion 2201 of the electric connector 20, thus guaranteeing the electrical connection between the mobile terminal and the charging cord or data transmission cable of the mobile terminal. In one embodiment, the electric connector 20 is disposed on the bottom plate 110 of the case body 10; certainly, this will not limit the scope of protection of the present disclosure, and the electric connector 20 can also be disposed on the side plate 120 of the case body 10. The structure of the electric connector 20 has been described in detail in the above embodiment of the electric connector for the mobile terminal, and will not be provided with details here.

The circuit board 30, disposed in or on the bottom plate 110 of the case body 10, is electrically connected with the pins of the first pin portion 2102 and the pins of the second pin portion 2202 of the electric connector 20, respectively.

The above mobile terminal fitting, through the electric connector 20 and the circuit board 30, can then provide electrical extension for the mobile terminal, and is no longer simply a case body protecting the mobile terminal. For example, the mobile terminal fitting provides charging, extended storage and near-field wireless communication and other functions.

The bottom plate 110 can have a hollow portion, so as to allow an electric extension device 40 such as the circuit board 30, a memory card or a wireless communication card to be installed therein. Certainly, if the protection function is not considered, these electric extension devices can also be directly disposed on the bottom plate.

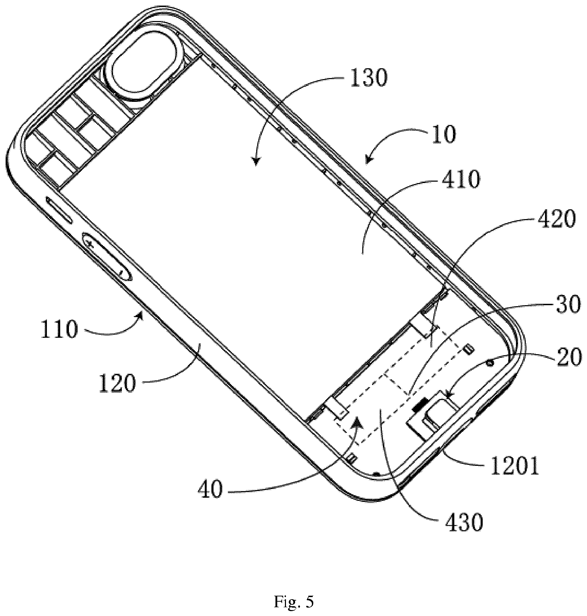

As shown in Fig. 5, which is a schematic view of the assembled structure of a mobile terminal fitting according to the embodiment of the present disclosure, the accommodating groove 130 is used for accommodating the mobile terminal, playing a role in protecting the mobile terminal.

The plug portion of the electric connector 20, matchable to the charging interface of the mobile terminal, can be electrically connected with the rechargeable battery 410 through the circuit board 30 immediately after it is inserted into the charging interface of the mobile terminal, while the rechargeable battery can be accommodated in or placed directly on the bottom plate 110 as a part of the circuit board.

Because the mobile terminal fitting provided by the example of the present disclosure is no longer simply a protective case body but also provides an electric connector on the case body, it is necessary to take into account the convenience of assembling the mobile terminal fitting onto the mobile terminal. The plug of the electric connector is to be inserted into the mobile terminal, which is thus to be disposed in the accommodating groove. The mobile terminal is to be coupled with the plug of the electric connector on one hand, and to be tightly disposed in the accommodating groove on the other hand, and thus damage to the electric connector will be easily caused without good structure design. Therefore, the present disclosure provides several embodiments to solve the above problems.

First, according to an embodiment of the present disclosure, the bottom plate 110 can be designed to be separable from the side plate 120, the electric connector is disposed at a side end of the bottom plate 110, and the side plate 120 has a positioning hole corresponding to the electric connector. In this way, with the side plate separated from the bottom plate and the bottom plate as an open flat, a user can first make the mobile terminal close to the bottom plate and apply a force toward the electric connector to get the base socket (e.g. the charging interface) of the mobile terminal to be coupled with the plug of the electric connector, and then install the side plate. Because here the mobile terminal has been coupled with the plug of the electric connector, no damage will be caused to the electric connector while the side plate is installed.

Besides, according to another example of the present disclosure, no matter whether the bottom plate 110 is separable from the side plate 120, the side plate 120 can be designed to be deformable in shape. For example, the side plate 120, made of an elastic material, can be appropriately stretched outward while in use because the shape of the elastic material can be changed, which makes the formed accommodating groove expanded and facilitates placement of the mobile terminal into the accommodating groove to get coupled with the electric connector; then the side plate is released to naturally wrap the mobile terminal, and thus the mobile terminal can be conveniently removed.

In fact, the side plate 120 is preferably correspondingly slightly smaller than the outline of the mobile terminal in shape and size while not in use, and matches the sides of the mobile terminal in shape and size after elastic deformation. In this way, with its good expansion and contraction guaranteed by the elastic material, not only the installation and removal can be easily completed but also the wrapped mobile terminal can be more integral, facilitating operation of the mobile terminal.

Again for example, the side plate 120 can have at least one snap-in device for achieving deformation, i.e., the side plate after snapping matches the sides of the mobile terminal in shape and size. The snap-in device can ensure that the side plate 120 is slightly bigger than the mobile terminal in size when the snap-in device is snapped open, and the snap-in device is snapped shut after the mobile terminal is entirely placed into the side plate 120, and then the mobile terminal is completely wrapped, with the number of the snap-in device determined based on the size of the side of the mobile terminal.

The above examples are just further description of the deformable structure of the side plate 120 of the present disclosure and will not limit the side plate 120, and other deformable structures shall also be regarded as within the scope of protection of the present disclosure.

Besides, the bottom plate 110 and the side plate 120 can also be separated from each other, and interconnected in a snapping manner. This separable structure facilitates installation and removal of the side plate 120, and allows free mixing and matching of the bottom plate 110 and the side plate 120 according to personal preferences, adding fun to using the mobile terminal.

The above separable bottom plate 110 and side plate 120 is also just an embodiment of the present disclosure, and does not limit the present disclosure. In other embodiment of the present disclosure, when the side plate 120 is made of an elastic material, due to its contraction and expansion nature, there is no need to produce a case body 10 with the bottom plate 110 separable from the side plate 120, and the bottom plate 110 can also be integrated with the side plate 120. When the side plate 120 is bent, deformed and expanded, the mobile terminal is placed into the accommodating groove 130; thereafter, the side plate 120 contracts due to its elasticity, making the mobile terminal completely wrapped by the bottom plate 110 and the side plate 120, with the entire operation being simple and easy and the wrapping effect being excellent.

Typically, because the bottom plate 110 is to carry a circuit board and other electric devices, it is usually made of a rigid material that is not easily deformed, while the side plate 120 can be deformed; therefore, the electric connector 20 will be usually installed on the bottom plate 110, and then inserted into the mobile terminal, making the mobile terminal just flat on the bottom plate 110; finally, following the deformation of the side plate 120, the side plate 120 is disposed around the periphery of the mobile terminal, and then forms an accommodating groove 130 with the bottom plate 110 to get the mobile terminal wrapped into the case body 10. This deformable mobile terminal fitting is easier to be installed and removed.

As shown in Fig. 4, which is a schematic view of the disassembled structure of a mobile terminal fitting according to the embodiment of the present disclosure, the circuit board 30 is a double-sided circuit board, the pin of the first pin portion 2102 of the electric connector 20 being electrically connected with the upper circuit of the double-sided circuit board, the pin of the second pin portion 2202 of the electric connector 20 being electrically connected with the lower circuit of the double-sided circuit board. This double-sided circuit board structure is easy to be installed, and allows plug-and-play, making the operation convenient.

As shown in Figs. 4 and 5, which are a schematic view of the disassembled and assembled structure of a mobile terminal fitting according to the embodiment of the present disclosure, the mobile terminal fitting of this example further comprises an extension device 40, which is electrically connected with the circuit board 30 and includes a rechargeable battery 410, a memory card 420 and a wireless communication device 430. When the extension device 40 is disposed in the bottom plate 110 of the case body 10, i.e., the bottom plate 110 of the case body 10 and the extension device 40 are integrated with each other, lead processing needs to be performed on the bottom plate 110, so as to guarantee the electrical connection between the extension device 40 and the circuit board 20. In the embodiment of the present disclosure, the extension device 40 is disposed on the bottom plate 110 of the case body 10, i.e., each component of the extension device 40 is removable, which facilitates flexible configuration and can also guarantee the electrical connection relationship between the extension device 40 and the circuit board 30.

The battery 410, extending electric energy for the mobile terminal, may be a rechargeable lithium battery or other rechargeable batteries; this embodiment takes a lithium battery as an example for description, which will not limit the scope of protection of the present disclosure. The memory card 420, being a memory card that can extend the mobile terminal, may be an SD card, an MMC card, a PCIe flash card and a CF card. This embodiment takes the more common SD card as an example for description, which will not limit the scope of protection of the present disclosure. The wireless communication device 430 can provide the wireless communication service for a mobile terminal without a wireless communication device. Besides, the extension device 40 is used to extend the mobile terminal, and this example just takes electric energy extension, storage extension and wireless communication function extension as an example for description, and adding other extension components to the extension device 20 and making other forms of extension shall also be understood herein as belonging to the scope of the idea of the present disclosure.

The above description shows and describes some embodiments of the present disclosure; however, as previously mentioned, the present disclosure shall not be understood as being limited to the form disclosed herein, and other embodiments shall not be regarded as an exclusion but can be applied to various other combinations, amendments and environments instead, and alterations can be made based on the above teachings or the technology or knowledge in the related fields within the range of the conception of the present disclosure described herein. All the amendments and alterations made by those skilled in the art without departing from the scope of the present disclosure shall be within the scope of protection of the appended claims of the present disclosure.

Accordingly the present invention also relates to an electric connector fo a mobile terminal fitting and a mobile terminal fitting. The mobile terminal fitting comprises a case body, an electric connector and a circuit board. The case body includes a bottom plate and a side plate that can be separated from each other, with the mobile terminal disposed in an accommodating groove formed by the side plate and the bottom plate of the case body, wherein the side plate is deformable in shape to ensure that the case body is easy to be installed and removed. The electric connector, disposed on the case body, comprises a socket and a plug, and can guarantee the electrical connection between the charging cord/data cable of the mobile terminal and the mobile terminal in the case body of the mobile terminal fitting.

## Claims

1. An electric connector (20) for a mobile terminal fitting comprising:
a plug (210), provided with an inserting portion (2101) having a plurality of electrical contacts and a first pin portion (2102) having a plurality of pins, the pins of the first pin portion (2102) being respectively electrically connected with the electrical contacts of the inserting portion (2101) and extending for a first distance in a vertical direction after leading out from a rear end of the inserting portion (2101) and extending for a second distance in a horizontal direction toward the front end of the inserting portion (2101) after extending for the first distance in the vertical direction; and
a socket (220), provided with an accommodating portion (2201) having a plurality of electrical contacts and a second pin portion (2202) having a plurality of pins, the pins of the second pin portion (2202) being respectively electrically connected with the electrical contacts of the accommodating portion (2201), and the pins of the second pin portion (2202) extending for a third distance in the horizontal direction from a rear end of the accommodating portion (2201).

2. The electric connector (20) for the mobile terminal fitting according to claim 1, wherein the inserting direction of the plug (210) is parallel to the accommodating direction of the socket; a portion of the pin of the first pin portion (2102), extending in the vertical direction after leading out from the rear end of the inserting portion (2101), is in the same plane with an outer side of the accommodating portion (2201) of the socket.

3. The electric connector (20) for the mobile terminal fitting according to any of the preceding claims, further comprising a carrier plate (230), wherein the plug (210) and the socket (220) are integrated with each other by the carrier plate (230).

4. The electric connector (20) for the mobile terminal fitting according to any of the preceding claims, wherein there is a fourth distance in the vertical direction from a portion of the pin of the plug (210) extending in the horizontal direction toward the front end of the inserting portion (2101) to a portion of the pin of the socket extending in the horizontal direction; the fourth distance is configured to match a thickness of a circuit board in the mobile terminal fitting.

5. The electric connector (20) for the mobile terminal fitting according to any of the preceding claims, wherein the portion of the pin of the plug (210) extending in the horizontal direction toward the front end of the inserting portion (2101) and the portion of the pin of the socket extending in the horizontal direction are mutually stacked in the vertical direction; the inserting portion (2101) has one front end side and two lateral end sides, with a smooth transition formed at the junction between the front end side and the two lateral end sides; the two lateral end sides have a lead-in slot (2105), respectively, which is formed on one end into a depression on the lateral end side, and smoothly extends on the other end to the smooth transition of the front end side.

6. The electric connector (20) for the mobile terminal fitting according to any of the preceding claims, wherein the first distance is configured to match a distance from a lower edge of an interface in a mobile terminal corresponding to the plug (210) to a rear side of the mobile terminal.

7. A mobile terminal fitting, comprising:
a case body (10), having a bottom plate (110) and a side plate (120), the side plate (120) being disposed around the bottom plate (110) and forming an accommodating groove by enclosing together with the bottom plate (110);
the mobile terminal fitting comprising:
an electric connector (20), disposed on the case body (10), in accordance with any of the preceding claims, and
a circuit board (30), disposed in or on the bottom plate of the case body (10), electrically connected with the pins of the first pin portion (2102) and the pins of the second pin portion (2202), respectively.

8. The mobile terminal fitting according to claim 7, wherein the side plate (120) is deformable in shape.

9. The mobile terminal fitting according to claim 7 or 8, wherein the side plate (120) is made of an elastic material, with the side plate (120) after elastic deformation configured to match sides of a mobile terminal in shape and size.

10. The mobile terminal fitting according to claim 9, wherein the side plate has at least one snap-in device, with the side plate after being snapped shut configured to match the sides of the mobile terminal in shape and size.

11. The mobile terminal fitting according to any of claims 7 to 10, wherein the bottom plate (110) and the side plate (120) of the case body (10) are configured to be separated from each other, the electric connector (20) being disposed at a side end of the bottom plate (110), the side plate (120) having a positioning hole corresponding to the electric connector (20).

12. The mobile terminal fitting according to any of claims 7 to 11, further comprising an extension device (40) electrically connected with the circuit board.

13. The mobile terminal fitting according to any of claims 9 to 10, wherein the circuit board is a double-sided circuit board, the pins of the first pin portion (2102) being electrically connected with the upper circuit of the double-sided circuit board, the pins of the second pin portion (2202) being electrically connected with the lower circuit of the double-sided circuit board; the inserting portion (2101) of the plug faces toward the inside of the accommodating groove, with the inserting portion (2101) configured to match a corresponding base socket in the mobile terminal in position and structure.

14. The mobile terminal fitting according to claim 13, wherein
the opening direction of the accommodating portion (2201) faces toward the outside of the accommodating groove, with the accommodating portion (2201) corresponding to the base socket in the mobile terminal in structure.

15. The mobile terminal fitting according to claim 14, wherein the first distance matches a distance from a lower edge of an interface in a mobile terminal corresponding to the plug (210) to a rear side of the mobile terminal.

## Patentansprüche

1. Elektrischer Verbinder (20) für ein mobiles Endgerät, umfassend:
einen Stecker (210), der mit einem Einführabschnitt (2101) mit einer Vielzahl von elektrischen Kontakten und einem ersten Stiftabschnitt (2102) mit einer Vielzahl von Stiften versehen ist, wobei die Stifte des ersten Stiftabschnitts (2102) jeweils elektrisch mit den elektrischen Kontakten des Einführabschnitts (2101) verbunden sind und sich über eine erste Strecke in einer vertikalen Richtung erstrecken, nachdem sie aus einem hinteren Ende des Einführabschnitts (2101) herausführen, und sich über eine zweite Strecke in einer horizontalen Richtung zum vorderen Ende des Einführabschnitts (2101) hin erstrecken, nachdem sie sich über die erste Strecke in der vertikalen Richtung erstreckt haben; und
eine Buchse (220), die mit einem Aufnahmeabschnitt (2201) mit einer Vielzahl von elektrischen Kontakten und einem zweiten Stiftabschnitt (2202) mit einer Vielzahl von Stiften versehen ist, wobei sich die Stifte des zweiten Stiftabschnitts (2202) jeweils elektrisch mit den elektrischen Kontakten des Aufnahmeabschnitts (2201) verbunden sind und wobei sich die Stifte des zweiten Stiftabschnitts (2202) über eine dritte Strecke in der horizontalen Richtung von einem hinteren Ende des Aufnahmeabschnitts (2201) erstrecken.

2. Elektrischer Verbinder (20) für das mobile Endgerät nach Anspruch 1, wobei die Einsteckrichtung des Steckers (210) parallel zur Aufnahmerichtung der Buchse ist; ein Abschnitt des Stifts des ersten Stiftabschnitts (2102), der sich in der vertikalen Richtung erstreckt, nachdem er aus dem hinteren Ende des Einsteckabschnitts (2101) herausgeführt wurde, sich in der gleichen Ebene mit einer Außenseite des Aufnahmeabschnitts (2201) der Buchse befindet.

3. Elektrischer Verbinder (20) für das mobile Endgerät nach einem der vorhergehenden Ansprüche, weiter umfassend eine Trägerplatte (230), wobei der Stecker (210) und die Buchse (220) durch die Trägerplatte (230) miteinander integriert sind.

4. Elektrischer Verbinder (20) für das mobile Endgerät nach einem der vorhergehenden Ansprüche, wobei es eine vierte Strecke in der vertikalen Richtung von einem Abschnitt des Stifts des Steckers (210), der sich in der horizontalen Richtung zum vorderen Ende des Einsteckabschnitts (2101) hin erstreckt, zu einem Abschnitt des Stifts der Buchse gibt, der sich in der horizontalen Richtung erstreckt; wobei die vierte Strecke so konfiguriert ist, dass er zu einer Dicke einer Leiterplatte im mobilen Endgerät passt.

5. Elektrischer Verbinder (20) für das mobile Endgerät nach einem der vorhergehenden Ansprüche, wobei der Abschnitt des Stifts des Steckers (210), der sich in der horizontalen Richtung zum vorderen Ende des Einsteckabschnitts (2101) hin erstreckt, und der Abschnitt des Stifts der Buchse, der sich in der horizontalen Richtung erstreckt, in der vertikalen Richtung übereinander angeordnet sind; der Einführabschnitt (2101) eine vordere Endseite und zwei seitliche Endseiten aufweist, wobei ein glatter Übergang an der Verbindung zwischen der vorderen Endseite und den beiden seitlichen Endseiten ausgebildet ist; die beiden seitlichen Endseiten jeweils einen Einführungsschlitz (2105) aufweisen, der an einem Ende in einer Vertiefung an der seitlichen Endseite ausgebildet ist und sich an dem anderen Ende glatt zu dem glatten Übergang der vorderen Endseite erstreckt.

6. Elektrischer Verbinder (20) für das mobile Endgerät nach einem der vorhergehenden Ansprüche, wobei der erste Abstand so konfiguriert ist, dass er zu einer Strecke von einer Unterkante einer Schnittstelle in einem mobilen Endgerät, die dem Stecker (210) entspricht, zu einer Rückseite des mobilen Endgerätes passt.

7. Mobiles Endgerät, umfassend:
einen Gehäusekörper (10) mit einer Bodenplatte (110) und einer Seitenplatte (120), wobei die Seitenplatte (120) um die Bodenplatte (110) herum angeordnet ist und durch ein Einschließen zusammen mit der Bodenplatte eine Aufnahmerille bildet,
wobei das mobile Endgerät umfasst:
einen elektrischen Verbinder (20), der an dem Gehäusekörper (10) angeordnet ist, nach einem der vorhergehenden Ansprüche, und
eine Leiterplatte (30), die in oder auf der Bodenplatte des Gehäusekörpers (10) angeordnet ist und elektrisch mit den Stiften des ersten Stiftabschnitts (2102) bzw. den Stiften des zweiten Stiftteils (2202) verbunden ist.

8. Mobiles Endgerät nach Anspruch 7, wobei die Seitenplatte (120) in ihrer Form verformbar ist.

9. Mobiles Endgerät nach Anspruch 7 oder 8, wobei die Seitenplatte (120) aus einem elastischen Material hergestellt ist, wobei die Seitenplatte (120) nach elastischer Verformung so konfiguriert ist, dass sie in Form und Größe zu den Seiten eines mobilen Endgeräts passt.

10. Mobiles Endgerät nach Anspruch 9, wobei die Seitenplatte mindestens eine Einrastvorrichtung aufweist, wobei die Seitenplatte nach dem Einrasten so konfiguriert ist, dass sie in Form und Größe zu den Seiten des mobilen Endgeräts passt.

11. Mobiles Endgerät nach einem der Ansprüche 7 bis 10, wobei die Bodenplatte (110) und die Seitenplatte (120) des Gehäusekörpers (10) so konfiguriert sind, dass sie voneinander trennbar sind, wobei der elektrische Verbinder (20) an einem seitlichen Ende der Bodenplatte (110) angeordnet ist und die Seitenplatte (120) ein dem elektrischen Verbinder (20) entsprechendes Positionierungsloch aufweist.

12. Mobiles Endgerät nach einem der Ansprüche 7 bis 11, weiter umfassend eine Verlängerungsvorrichtung (40), die elektrisch mit der Leiterplatte verbunden ist.

13. Mobiles Endgerät nach einem der Ansprüche 9 bis 10, wobei die Leiterplatte eine doppelseitige Leiterplatte ist, wobei die Stifte des ersten Stiftabschnitts (2102) elektrisch mit der oberen Schaltung der doppelseitigen Leiterplatte verbunden sind, wobei die Stifte des zweiten Stiftabschnitts (2202) elektrisch mit der unteren Schaltung der doppelseitigen Leiterplatte verbunden sind; wobei der Einsteckabschnitt (2101) des Steckers zur Innenseite der Aufnahmerille weist, wobei der Einsteckabschnitt (2101) so konfiguriert ist, dass er in Position und Aufbau zu einer entsprechenden Basisbuchse in dem mobilen Endgerät passt.

14. Mobiles Endgerät nach Anspruch 13, wobei
die Öffnungsrichtung des Aufnahmeabschnitts (2201) zur Außenseite der Aufnahmerille weist, wobei der Aufnahmeabschnitt (2201) hinsichtlich des Aufbaus der Basisbuchse im mobilen Endgerät entspricht.

15. Mobiles Endgerät nach Anspruch 14, wobei der erste Abstand einer Strecke von einer Unterkante einer Schnittstelle in einem mobilen Endgerät, die dem Stecker (210) entspricht, zu einer Rückseite des mobilen Endgeräts passt.

## Revendications

1. Connecteur électrique (20) pour un accessoire de terminal mobile, comprenant :
une fiche (210) pourvue d'une portion d'insertion (2101), ayant une pluralité de contacts électriques, et d'une première portion à broches (2102) ayant une pluralité de broches, les broches de la première portion à broches (2102) étant respectivement connectées électriquement aux contacts électriques de la portion d'insertion (2101) et s'étendant sur une première distance dans une direction verticale, après être sorties d'une extrémité arrière de la portion d'insertion (2101), et s'étendant sur une deuxième distance dans une direction horizontale vers l'extrémité avant de la portion d'insertion (2101), après avoir parcouru la première distance dans la direction verticale ; et
une prise (220) pourvue d'une portion de logement (2201), ayant une pluralité de contacts électriques, et d'une deuxième portion à broches (2202), ayant une pluralité de broches, les broches de la deuxième portion à broches (2202) étant respectivement connectées électriquement aux contacts électriques de la portion de logement (2201), et les broches de la deuxième portion à broches (2202) s'étendant sur une troisième distance dans la direction horizontale à partir d'une extrémité arrière de la portion de logement (2201).

2. Connecteur électrique (20) pour l'accessoire de terminal mobile selon la revendication 1,
dans lequel la direction d'insertion de la fiche (210) est parallèle à la direction de logement de la prise ;
une partie de la broche de la première portion à broches (2102), s'étendant dans la direction verticale après être sortie de l'extrémité arrière de la portion d'insertion (201), est située dans le même plan que le côté extérieur de la portion de logement (2201) de la prise.

3. Connecteur électrique (20) pour l'accessoire de terminal mobile selon l'une des revendications précédentes,
comprenant en outre une plaque de support (230), la fiche (210) et la prise (220) étant intégrées l'une à l'autre par la plaque de support (230).

4. Connecteur électrique (20) pour l'accessoire de terminal mobile selon l'une des revendications précédentes,
dans lequel est prévue une quatrième distance dans la direction verticale entre une partie de la broche de la fiche (210), s'étendant dans la direction horizontale vers l'extrémité avant de la portion d'insertion (2101), et une partie de la broche de la prise, s'étendant dans la direction horizontale ;
la quatrième distance est configurée pour correspondre à une épaisseur d'une carte de circuit imprimé dans l'accessoire de terminal mobile.

5. Connecteur électrique (20) pour l'accessoire de terminal mobile selon l'une des revendications précédentes,
dans lequel la partie de la broche de la fiche (210), s'étendant dans la direction horizontale vers l'extrémité avant de la portion d'insertion (2101), et la partie de la broche de la prise, s'étendant dans la direction horizontale, sont mutuellement empilées dans la direction verticale ;
la portion d'insertion (2101) présente un côté d'extrémité avant et deux côtés d'extrémité latéraux, une transition continue étant formée à la jonction entre le côté d'extrémité avant et les deux côtés d'extrémité latéraux ;
les deux côtés d'extrémité latéraux présentent chacun une fente d'entrée (2105) qui, à une extrémité, est formée dans une dépression sur le côté d'extrémité latéral et qui, à l'autre extrémité, s'étend en continu jusqu'à la transition continue du côté d'extrémité avant.

6. Connecteur électrique (20) pour l'accessoire de terminal mobile selon l'une des revendications précédentes,
dans lequel la première distance est configurée pour correspondre à une distance entre un bord inférieur d'une interface dans un terminal mobile, correspondant à la fiche (210), et le côté arrière du terminal mobile.

7. Accessoire de terminal mobile, comprenant
un corps de boîtier (10) ayant une plaque inférieure (110) et une plaque latérale (120), la plaque latérale (120) étant disposée autour de la plaque inférieure (110) et formant une rainure de logement en l'entourant avec la plaque inférieure (110) ;
l'accessoire de terminal mobile comprenant
un connecteur électrique (20) selon l'une des revendications précédentes, disposé sur le corps de boîtier (10), et
une carte de circuit imprimé (30) disposée dans ou sur la plaque inférieure du corps de boîtier (10), connectée électriquement aux broches de la première portion à broches (2102) et aux broches de la deuxième portion à broches (2202), respectivement.

8. Accessoire de terminal mobile selon la revendication 7,
dans lequel la plaque latérale (120) est de forme déformable.

9. Accessoire de terminal mobile selon la revendication 7 ou 8,
dans lequel la plaque latérale (120) est réalisée en un matériau élastique, la plaque latérale (120) étant configurée pour, après la déformation élastique, correspondre aux côtés d'un terminal mobile, en termes de forme et de taille.

10. Accessoire de terminal mobile selon la revendication 9,
dans lequel la plaque latérale comporte au moins un dispositif d'encliquetage, la plaque latérale étant configurée pour, après encliquetage, correspondre aux côtés du terminal mobile, en termes de forme et de taille.

11. Accessoire de terminal mobile selon l'une des revendications 7 à 10, dans lequel la plaque inférieure (110) et la plaque latérale (120) du corps de boîtier (10) sont configurées pour être séparées l'une de l'autre, le connecteur électrique (20) étant disposé à une extrémité latérale de la plaque inférieure (110), la plaque latérale (120) ayant un trou de positionnement correspondant au connecteur électrique (20).

12. Accessoire de terminal mobile selon l'une des revendications 7 à 11, comprenant en outre un dispositif d'extension (40) connecté électriquement à la carte de circuit imprimé.

13. Accessoire de terminal mobile selon l'une des revendications 9 à 10, dans lequel la carte de circuit imprimé est une carte de circuit imprimé à double face, les broches de la première portion à broches (2102) étant connectées électriquement au circuit supérieur de la carte de circuit imprimé à double face, les broches de la deuxième portion à broches (2202) étant connectées électriquement au circuit inférieur de la carte de circuit imprimé à double face ;
la portion d'insertion (2101) de la fiche est tournée vers l'intérieur de la rainure de logement, la portion d'insertion (2101) étant configurée pour correspondre, en termes de position et de structure, à une prise de base correspondante dans le terminal mobile.

14. Accessoire de terminal mobile selon la revendication 13,
dans lequel la direction d'ouverture de la portion de logement (2201) est tournée vers l'extérieur de la rainure de logement, la portion de logement (2201) correspondant, en termes de structure, à la prise de base du terminal mobile.

15. Accessoire de terminal mobile selon la revendication 14,
dans lequel la première distance correspond à la distance entre un bord inférieur d'une interface dans un terminal mobile, correspondant à la fiche (210), et le côté arrière du terminal mobile.
